# EUROPEAN PATENT SPECIFICATION

(11) **EP 2 631 730 B1**
(45) Date of publication and mention of the grant of the patent: **24.09.2014**
(21) Application number: 13155993.2
(22) Date of filing: 20.02.2013
(51) Int. Cl.: G05D 1/02, A47L 11/40, A47L 9/00

(54) **Sensor assembly and robot cleaner having the same**
Sensoranordnung und Roboterreiniger damit
Capteur et robot nettoyeur muni dudit capteur

(30) Priority: 24.02.2012 US 201261602867 P; 03.08.2012 KR 20120085216
(43) Date of publication of application: 28.08.2013
(73) Proprietor: Samsung Electronics Co., Ltd, Gyeonggi-do 443-742 (KR)
(72) Inventor: Yoon, Sang Sik, Gyeonggi-do (KR); So, Jea Yun, Gyeonggi-do (KR); Jeong, Yeon Kyu, Suwon-si (KR)
(74) Representative: Hewett, Jonathan Michael Richard

(56) References cited:
- WO-A1-01/37060
- WO-A2-2004/082899
- US-A1- 2005 237 188
- US-A1- 2010 037 418
- US-A1- 2011 202 175

## Description

The present invention relates to a sensor assembly which executes autonomous traveling by sensing an obstacle and sensing a singular point, and a robot cleaner having the same.

An autonomous traveling robot is an apparatus which executes a designated task while traveling about a random area to be cleaned without user manipulation. The robot may execute autonomous traveling considerably, and such autonomous traveling may be implemented in various ways. For example, the robot may travel along a predetermined path using a map, and may travel without a predetermined path using a sensor sensing surrounding environments.

A robot cleaner is an apparatus which cleans the floor while traveling about an area to be cleaned without user manipulation. In more detail, the robot cleaner may be used to remove dust or to clean the floor of a home. Here, dust may mean soil dust, dirt, powder, fragments and other dust particles collectable by a vacuum cleaner or an automatic or semi-automatic cleaner.

Such a robot cleaner may include various sensors including an obstacle sensor to avoid an obstacle while autonomously traveling and a vision sensor executing correction of a traveling direction if the traveling robot cleaner slips.

Recently, a method of measuring a distance between a sensor and an obstacle using a point light source or structured light, such as light beam, is applied. If a point light source is used, only an obstacle present in the direction of the light which the point light source emits is detected, and in order to overcome such a problem, if the point light source is rotated, a separate servo-mechanism is required and a considerable scanning time is required, and thus efficiency may be lowered.

If a light beam is used, obstacles extend over plural regions other than one point may be simultaneously detected, but if light beam is generated using a conventional cylindrical lens, a detection range is limited and formation of uniform light beam may be difficult. Therefore, an aspect of the present invention provides a sensor assembly which executes functions of both an obstacle sensor and a vision sensor, and a robot cleaner having the same.

An aspect of the present invention provides a sensor assembly which generates a uniform light beam using a conical reflector and thus senses obstacles in all directions, and a robot cleaner having the same.

Additional aspects will be set forth in part in the description which follows and, in part, will be obvious from the description, or may be learned by practice of the invention.

In accordance with one aspect, a robot cleaner includes a main body and at least one sensor assembly mounted on the main body, wherein the sensor assembly includes a housing, a light emitting module mounted on the housing and generating a light beam, and a light receiving module mounted on the housing and receiving reflected light obtained by reflecting the light beam generated from the light emitting module by an obstacle, wherein the light receiving module includes a receiving reflector concentrating the reflected light and provided with the opened central part to form a vision hole and a camera unit sensing light, wherein the camera unit senses the reflected light concentrated by the receiving reflector and photographs an image above the main body through the vision hole, simultaneously.

The light emitting module may include a light emitting unit generating light and an emitting reflector formed in a conical shape so as to reflect the light generated from the light emitting unit in all directions of 360 degrees.

The emitting reflector and the light emitting unit may be mounted on the housing such that the central parts thereof are aligned in a vertical line.

The receiving reflector may have a circular cross-sectional shape.

The receiving reflector may be formed in a conical shape, a part of which is cut flat, so as to be mounted on the housing.

The light receiving module may further include a wide-angle lens mounted on the upper portion of the receiving reflector to obtain a viewing angle of the camera unit.

The main body may include a vision window being transparent so as to allow the camera unit of the sensor assembly to photograph the image above the main body.

The vision window may include a wide-angle lens to obtain a viewing angle of the camera unit.

The at least one sensor assembly may be arranged on at least one of the front portion and the rear portion of the main body.

The at least one sensor assembly may be arranged on the front portion of the main body.

The at least one sensor assembly may be arranged at the central part of the main body.

The central part of the main body may be protruded upward such that the at least one sensor assembly is arranged at the central part of the main body.

The central part of the main body may be gently protruded upward such that the at least one sensor assembly is arranged at the central part of the main body.

In accordance with another aspect, a robot cleaner includes a main body and at least one sensor assembly mounted on the main body, wherein the sensor assembly includes a housing, a receiving reflector mounted on the housing, concentrating reflected light obtained by reflecting light by an obstacle, and provided with the opened central part to form a vision hole, and a camera unit sensing the reflected light concentrated by the receiving reflector and photographing an image above the main body through the vision hole, simultaneously.

The at least one sensor assembly may further include a wide-angle lens provided to obtain a viewing angle of the camera unit.

The at least one sensor assembly may further include a light emitting unit mounted on the housing and generating light.

The at least one sensor assembly may further include an emitting reflector mounted on the housing and formed in a conical shape so as to reflect the light generated from the light emitting unit in all directions of 360 degrees.

In accordance with a further aspect, a sensor assembly includes a housing, and a light receiving module mounted on the housing and receiving reflected light obtained by reflecting the light from an obstacle, wherein the light receiving module includes a receiving reflector concentrating the reflected light and provided with the opened central part to form a vision hole and a camera unit sensing light, wherein the camera unit senses the reflected light concentrated by the receiving reflector and photographs an image above the main body through the vision hole, simultaneously.

The sensor may further include a light emitting module mounted on the housing and generating a light beam, the light emitting module and the light receiving module formed integrally.

The light receiving module may further include a wide-angle lens mounted on the upper portion of the receiving reflector to obtain a viewing angle of the camera unit.

The light emitting module may include a light emitting unit generating light and an emitting reflector formed in a conical shape.

These and/or other aspects of the invention will become apparent and more readily appreciated from the following description of the embodiments, taken in conjunction with the accompanying drawings of which:
FIG. 1 is a perspective view illustrating a robot cleaner in accordance with one embodiment;
FIG. 2 is a view illustrating the configuration of the robot cleaner in accordance with the embodiment;
FIG. 3 is a perspective view illustrating a sensor assembly in accordance with one embodiment;
FIG. 4 is a view illustrating light beam generated from a light emitting module of the sensor assembly of FIG. 3;
FIG. 5 is a view illustrating a region of the light beam emitted from the robot cleaner in accordance with the embodiment;
FIG. 6 is a plan view of a receiving reflector of the sensor assembly of FIG. 3;
FIG. 7 is a view schematically illustrating the configuration and operation of the sensor assembly of the robot cleaner in accordance with the embodiment;
FIG. 8 is a view illustrating an image recognized by a camera unit of the sensor assembly in accordance with the embodiment;
FIG. 9 is a view illustrating the configuration of a robot cleaner in accordance with one embodiment;
FIG. 10 is a side view of the robot cleaner of FIG. 9;
FIG. 11 is a view illustrating a region of the light beam emitted from the robot cleaner of FIG. 9;
FIG. 12 is a view illustrating the configuration of a robot cleaner in accordance with one embodiment;
FIG. 13 is a view illustrating a region of the light beam emitted from the robot cleaner of FIG. 12;
FIG. 14 is a view illustrating the configuration of a robot cleaner in accordance with one embodiment;
FIG. 15 is a view illustrating a region of the light beam emitted from the robot cleaner of FIG. 14; and
FIGS. 16A to 19 are views illustrating sensor assemblies in accordance with embodiments.

Reference will now be made in detail to the embodiments, examples of which are illustrated in the accompanying drawings, wherein like reference numerals refer to like elements throughout.

Hereinafter, a sensor assembly and a robot cleaner having the same in accordance each embodiment will be described with reference to the accompanying drawings.

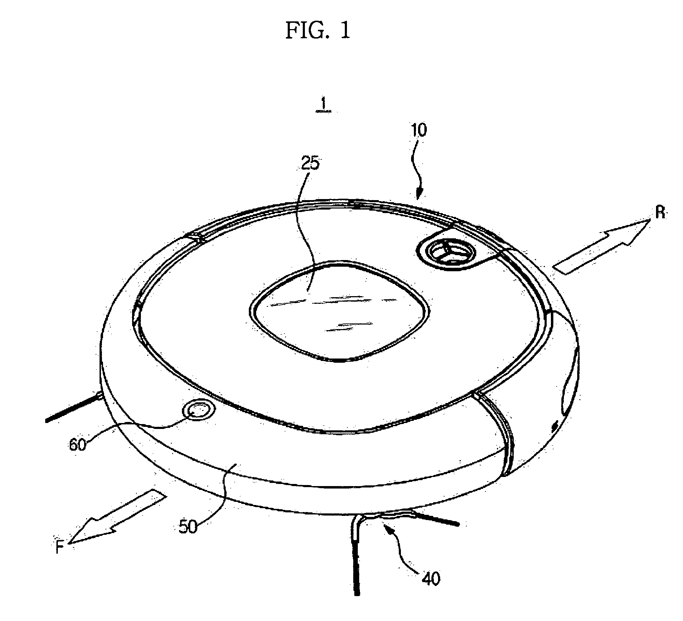

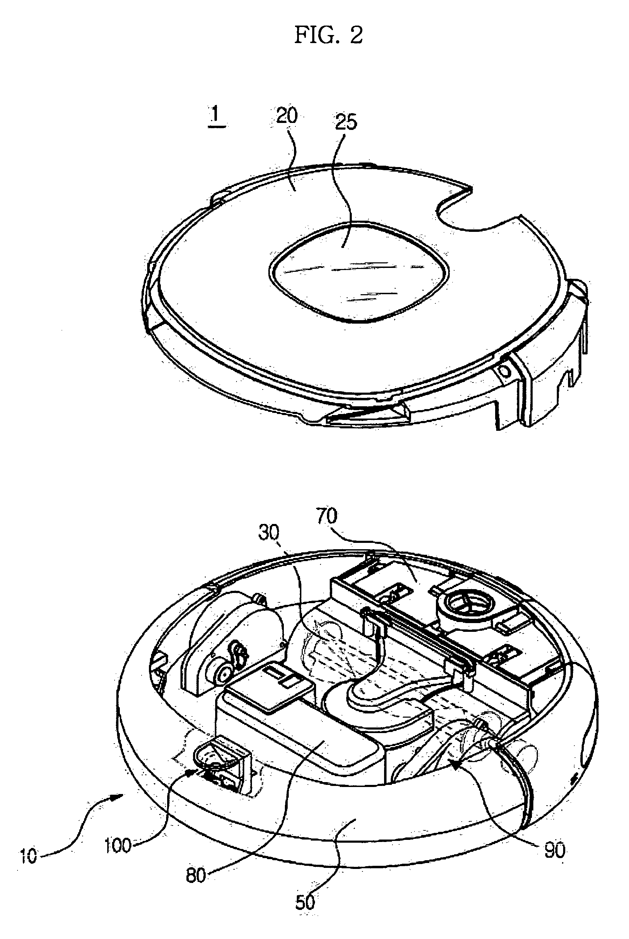

FIG. 1 is a perspective view illustrating a robot cleaner in accordance with one embodiment, and FIG. 2 is a view illustrating the configuration of the robot cleaner in accordance with the embodiment. With reference to FIG. 1, F denotes a forward moving direction, and R denoted a rearward moving direction. Based on these directions, the forward moving direction is defined as the forward direction, and the rearward moving direction is defined as the rearward direction.

As shown in FIGS. 1 and 2, a robot cleaner 1 may include a main body 10 forming the external appearance of the robot cleaner 1, a cover 20 covering the upper portion of the main body 10, and a main brush 30 sweeping up dust present in a space to be cleaned or dispersing the dust.

The main body 10 may have various shapes. For example, the main body 10 may be formed in a circular shape. If the circular main body 10 is rotated, the rotating radius of the main body 10 is constant and thus the main body 10 may avoid contact with a peripheral obstacle and easily change direction. Further, the circular main body 10 may prevent the main body 10 from being caught on an obstacle during traveling.

Two driving wheels 90 may be symmetrically arranged at the left and right edges of the central region of the lower portion of the main body 10. The two driving wheels 90 allow the robot cleaner 1 to execute motions, such as forward movement, rearward movement and rotation, during cleaning. For example, the left and right driving wheels 90 may be identically controlled so that the robot cleaner 1 may travel in the forward or rearward direction. Otherwise, the left and right driving wheels 90 may be differently controlled so that the robot cleaner 1 may change direction.

A caster (not shown) may be installed at the front edge of the lower portion of the main body 10. The caster (not shown) may allow the robot cleaner 1 to maintain the stable pose. The driving wheels 90 and the caster (not shown) may be formed in one assembly which is detachably mounted on the lower portion of the main body 10.

A power supply unit 80 to drive the main body 10 and various constituent parts mounted on the main body 10 may be arranged within the main body 10. The power supply unit 80 may include a battery electrically connected to respective drive devices and supplying drive power. As the battery, a rechargeable secondary battery is used, and such a secondary battery is charged with power supplied from a docking station (not shown) if the main body 10 having completed the cleaning process is connected to the docking station (not shown).

The main brush 30 may be mounted at a position slightly to the rear of the central region of the lower portion of the main body 10. The main brush 30 removes dust accumulated on the floor on which the main body 10 is placed. The main brush 30 agitates dust accommodated on the floor and guides the dust to a dust inlet (not shown). An air blower device (not shown) is provided within the dust inlet (not shown), and thus moves the dust introduced into the dust inlet (not shown) to a dust collector 70.

Side brushes 40 to clean areas at the side of the main body 10 or corner areas may be mounted on the main body 10. Each of the side brushes 40 may be rotatably mounted at one side of the edge of the lower surface of the main body 10. The side brushes 40 may be mounted at positions located diagonally from the central region of the main body 10 to the front portion of the main body 10.

The side brushes 40 may move dust accumulated around the main body 10 to the main brush 30. The side brushes 40 may extend the cleaning range of the robot cleaner 1 to the periphery of the floor under the main body 10.

A display unit 25 to display various pieces of information, such as the operating state of the robot cleaner 1, the amount of dust, the charge amount of the battery, time, etc., may be formed at the central region of the cover 20.

A sensor assembly 100 may be mounted on the front portion of the main body 10. A sensor window 50 may be formed on the front surface of the main body 10 so that the light beam generated from the sensor assembly 100 is transmitted by the sensor window 50 and light reflected by an obstacle or a wall surface is introduced into the sensor window 50.

The sensor window 50 may be formed of a material which may transmit light generated from the sensor assembly 100. A film transmitting light of only a specific range which the sensor assembly 100 may sense may be adhered to the sensor window 50. For example, if the sensor assembly 100 emits infrared light and senses light reflected by an obstacle and a wall surface among the infrared light, an infrared filter transmitting only infrared light may be adhered to the sensor window 50.

A vision window 60 may be formed on the main body 10 above the sensor assembly 100 so as to allow the sensor assembly 100 to photograph an upper image perpendicular to the traveling direction of the robot cleaner 1. The vision window 60 may be formed of a transparent material so as to allow the sensor assembly 100 to effectively photograph the upper image. Since the visible light passes through the image, the vision window 60 may be completely transparent so as to transmit visible light.

A lens may be mounted at the center of the vision window 60, and a description thereof will be given later.

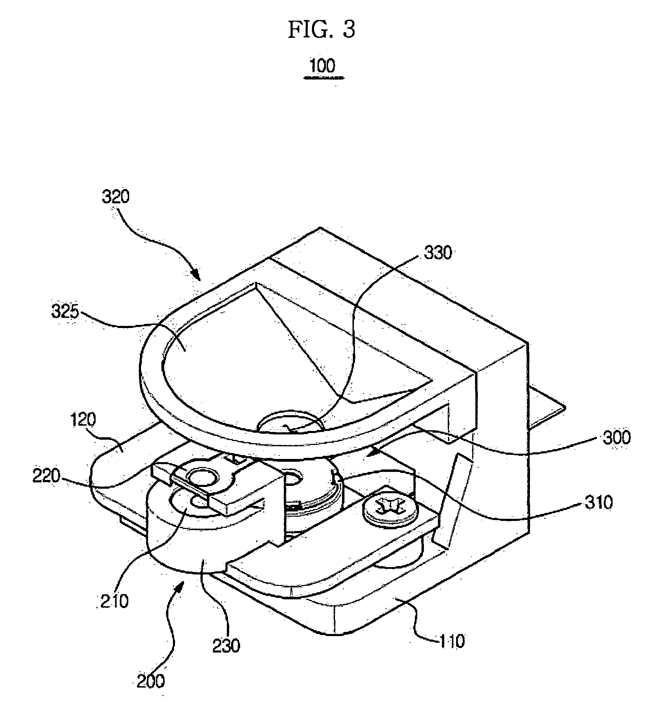

FIG. 3 is a perspective view illustrating the sensor assembly in accordance with the embodiment.

As shown in FIG. 3, the sensor assembly 100 may include a light emitting module 200 and a light receiving module 300.

A housing 110 may form the external appearance of the sensor assembly 100. The light emitting module 200 and the light receiving module 300 may be mounted on the housing 110. The light emitting module 200 and the light receiving module 300 mounted on the housing 110 may form one sensor assembly 100.

Although this embodiment illustrates the light emitting module 200 and the light receiving module 300 as forming one sensor assembly 100, the light emitting module 200 and the light receiving module 300 are separately mounted.

A support part 120 may be provided on the front surface of the bottom of the housing 110, and the light emitting module 200 is mounted on the support part 120.

A camera unit 310 of the receiving module 300 may be arranged in the rear of the light emitting module 200.

A receiving reflector 320 may be mounted on a column part bent upward from the bottom of the housing 110. The receiving reflector 320 may be mounted on the housing 110 so as to be located perpendicularly above the camera unit 310.

The light emitting module 200 may include a light emitting unit 210 and an emitting reflector 220. The light emitting unit 210 and the emitting reflector 220 may be mounted a light emitting module case 230 and form one light emitting module 200.

The light emitting unit 210 corresponds to a light source generating light and irradiating the light, and may employ a laser diode (LD) or an LED. The kind of the light emitting unit 210 is not limited but, hereinafter, a light emitting unit 210 employing an LD will be exemplarily described.

A laser generated from the light emitting unit 210 may be in an infrared light region or a visible light region. Hereinafter, a laser in the infrared light region irradiated from the light emitting unit 210 will be exemplarily described.

The emitting reflector 220 may be formed in a conical shape. The emitting reflector 220 is mounted on the light emitting module case 230 such that the apex (vertex) of the emitting reflector 220 faces the light emitting unit 210. The emitting reflector 220 may be arranged such that the apex of the emitting reflector 220 is located perpendicularly above the center of the light emitting unit 210.

The light receiving module 300 may include the receiving reflector 320 and the camera unit 310. The light beam generated from the light emitting module 200 is reflected by an obstacle or a wall surface and thus forms reflected light, and such reflected light is concentrated by the receiving reflector 320. The receiving reflector 320 reflects the reflected light toward the camera unit 310. The camera unit 310 senses the reflected light reflected by the receiving reflector 320.

The receiving reflector 320 is formed in an almost conical shape such that the apex part of the receiving reflector 320 is opened to form a vision hole 330. The vision hole 330 allows the camera unit 310 to photograph an image perpendicularly above the robot cleaner 1 through the vision window 60.

In order to mount the receiving reflector 320 on the housing 110, a part of the receiving reflector 320 mounted on the housing 110 may be flat. If the receiving reflector 320 may be mounted on the housing 110 using a separate mounting unit, the receiving reflector 320 may be formed in a completely conical shape.

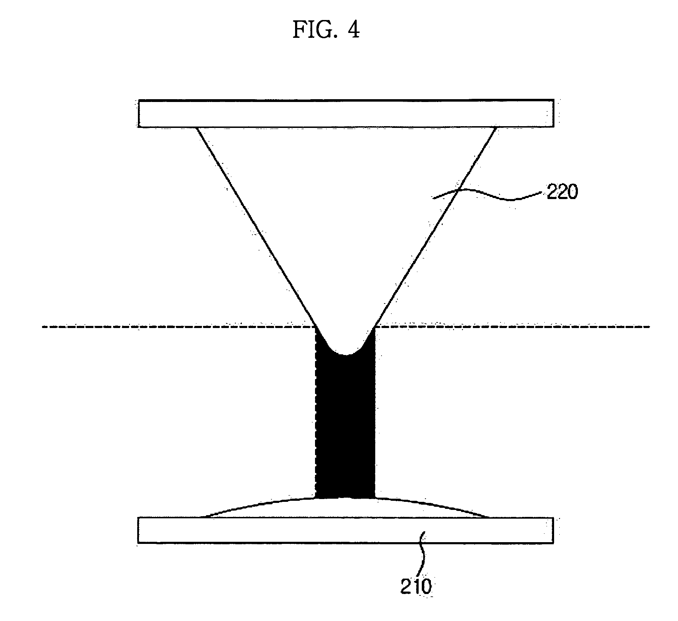

FIG. 4 is a view illustrating a light beam generated from the light emitting module of the sensor assembly of FIG. 3.

As shown in FIGS. 3 and 4, the light emitting unit 210 irradiates infrared light toward the emitting reflector 220. The infrared light irradiated to the emitting reflector 220 is reflected by the emitting reflector 220, thus directing the light beam in all directions of 360 degrees.

Although FIG. 4 illustrates that infrared light is reflected only in the leftward and rightward directions of the emitting reflector 220, infrared light is reflected in all directions of 360 degrees along the circumference of the conical emitting reflector 220.

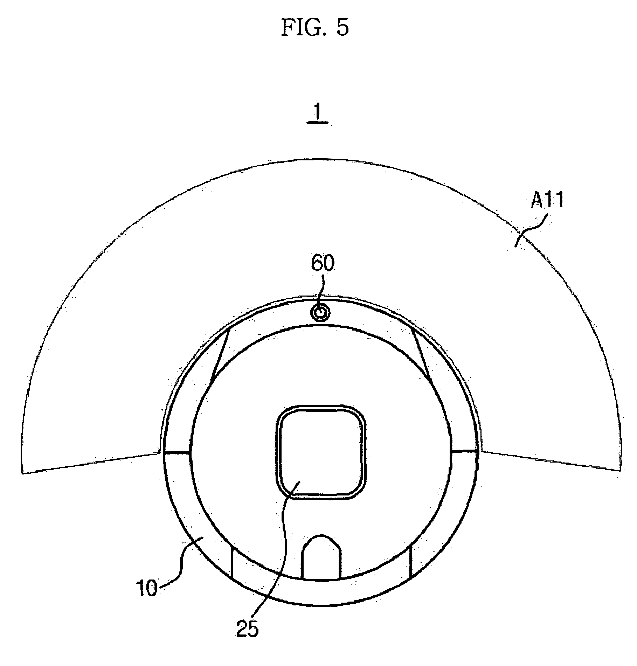

FIG. 5 is a view illustrating a region of the light beam emitted from the robot cleaner in accordance with the embodiment.

As shown in FIGS. 3 and 5, a region A11 of the light beam emitting from the robot cleaner 1 is not formed in a completely circular shape, and is formed in a fan shape.

Although the emitting reflector 220 emits infrared light in all direction of 360 degrees, the regions A11 of the light beam is formed in a fan shape, not in a circular shape, due to various constituent parts within the light emitting module case 230 and the main body 10.

The infrared light is emitted through the sensor window 50 (with reference to FIG. 1) of the robot cleaner 1.

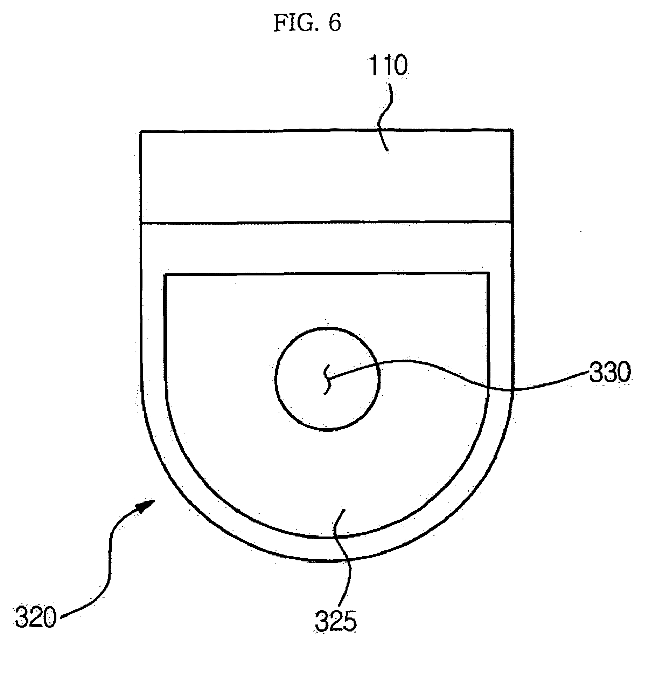

FIG. 6 is a plan view of the receiving reflector of the sensor assembly of FIG. 3.

As shown in FIG. 6, the central part of the receiving reflector 320 may be opened to form the vision hole 330.

The vision window 60 (with reference to FIG. 1) is arranged perpendicularly above the vision hole 330. The camera unit 310 photographs an image perpendicularly above the robot cleaner 1 through the vision hole 330 and the vision window 60.

The size of the vision hole 330 may be structurally insufficient to photograph an image above the robot cleaner 1. If the vision hole 330 has an insufficient size, a wide-angle lens 350 may be mounted on the upper portion of the receiving reflector 320.

The wide-angle lens 350 has a short focal length, and provides a wide viewing angle, as compared with a standard lens. Therefore, although the vision hole 330 has an insufficient size, the wide-angle lens 350 allows the camera unit 310 to photograph an image of a wide area above the robot cleaner 1.

The wide-angle lens 350 may be mounted on the housing 110 so as to be arranged on the upper portion of the receiving reflector 320. That is, the sensor assembly 100 may include the wide-angle lens 350.

Otherwise, a wide-angle lens 350 may be mounted at the central part of the vision window 60 (with reference to FIG. 1). Since the vision window 60 is arranged perpendicularly above the receiving reflector 320, if the wide-angle lens 350 is mounted on the vision window 60, the camera unit 310 may photograph an image of a sufficiently wide area above the robot cleaner 1.

The camera unit 310 senses a singular point provided on the ceiling by photographing the image above the robot cleaner 1. The singular point is a generic name of objects fixed to the ceiling, such as a fluorescent lamp, a column, a corner, etc.

The camera unit 310 may judge whether or not the robot cleaner 1 travels in the correct direction by sensing the singular point. As one example, if the robot cleaner 1 travels in parallel with a fluorescent lamp on the ceiling, when the robot cleaner 1 slips or moves due to an inclined floor surface or external force, the traveling direction of the robot cleaner 1 may be changed. In this case, when the robot cleaner 1 continuously travels, the robot cleaner 1 travels in a direction differing from the direction of the fluorescent lamp which has been originally recognized, and then relative movement of the fluorescent lamp sensed by the camera unit 310 may be changed. When the relative movement of the singular point, i.e., the fluorescent lamp, is changed, it is judged that the robot cleaner 1 travels in a direction differing from a desired direction, and thus the traveling direction of the robot cleaner 1 may be adjusted to the desired direction.

The traveling direction of the robot cleaner 1 may be correctly maintained by sensing the singular point above the robot cleaner 1 in such a manner.

As another example, if the robot cleaner 1 travels along a predetermined path, i.e., in case of a cleaning system requiring a map, a camera module to receive position information of the robot cleaner 1 and to create a map may be used.

In addition, the camera unit 310 may photograph an image above the robot cleaner 1 and use the image in various ways.

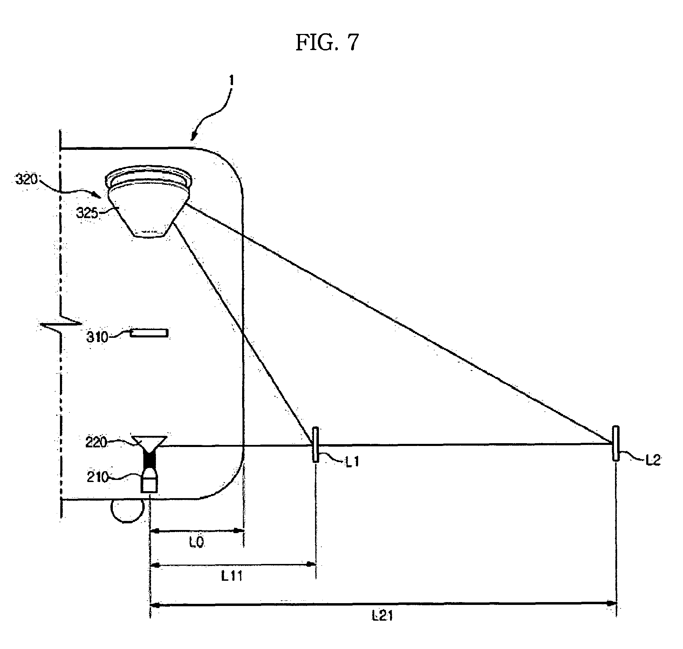

FIG. 7 is a view schematically illustrating the configuration and operation of the sensor assembly of the robot cleaner in accordance with the embodiment.

FIG. 7 illustrates the light emitting unit 210, the emitting reflector 220, the receiving reflector 320 and the camera unit 310 among the constituent parts of the sensor assembly 100 mounted on the front surface of the robot cleaner 1.

In order to illustrate the operation of the robot cleaner 1, arrangement of two obstacles L1 and L2 in front of the robot cleaner 1 will be exemplarily described. It is assumed that the first obstacle L1 and the second obstacle L2 are not arranged on the same line but, rather, are arranged on different lines.

The light emitting unit 210 irradiates infrared light toward the emitting reflector 220.

The infrared light irradiated to the emitting reflector 220 is reflected in all directions of 360 degrees by the emitting reflector 220, thus directing the light beam in all directions.

The light beam is reflected by the first obstacle L1 and the second obstacle L2, and is concentrated by the receiving reflector 320.

The camera unit 310 photographs an image using the reflected light concentrated by the receiving reflector 320.

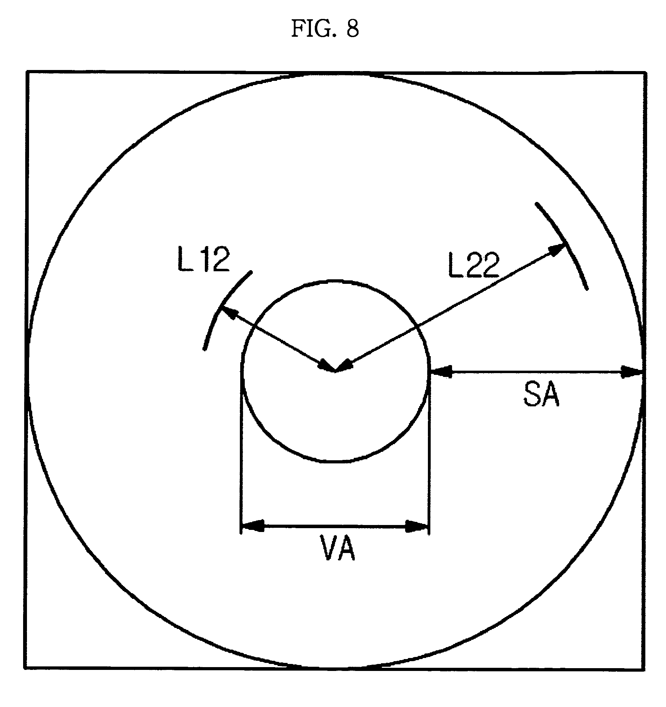

FIG. 8 is a view illustrating an image recognized by the camera unit of the sensor assembly in accordance with the embodiment.

As shown in FIGS. 7 and 8, the image recognized by the camera unit 310 is divided into an obstacle sensing area SA representing concentration of infrared light reflected by the obstacles into the receiving reflector 320, and a vision image area VA representing an image photographed through the vision hole 330.

Since the vision hole 330 is formed at the central part of the receiving reflector 320, the vision image area VA is formed at the center of the image recognized by the camera unit 310.

The vision image area VA is a part corresponding to a distance Lo from the sensor assembly 100 to the front surface of the robot cleaner 1, and thus does not represent the obstacles even if infrared light is reflected and concentrated. Therefore, although such an area represents the image photographed by the camera unit 310, sensing of an obstacle or a wall surface is not influenced thereby.

In the vision image area VA, the image above the robot cleaner 1 is directly displayed. The image recognized by the camera unit 310 represents infrared light reflected by the obstacles L1 and L2 among light beam, and may thus be shown by lines.

In such an image, two lines representing infrared light reflected by the obstacles L1 and L2 are formed. Since the first obstacle L1 and the second obstacle L2 are not arranged on the same line, the two lines are formed in different directions.

Among the two lines, the line formed at left represents infrared light reflected by the first obstacle L1, and the line formed at right represents infrared light reflected by the second obstacle L2.

Since a distance L11 to the first obstacle L1 is shorter than a distance L12 to the second obstacle L2, the left line is closer to the center than the right line.

Infrared light formed in the obstacle sensing area SA may be expressed through x and y coordinates, and this may correspond to correct absolute positions of the obstacles. In terms of distance, the actual distance L11 from the robot cleaner 1 to the first obstacle L1 and the distance L12 from the center of the image to the left infrared line have the corresponding value. The actual distance L11 to the first obstacle L1 may be calculated by analyzing the distance L12 through a controller (not shown).

In such a manner, the directions in which the obstacles L1 and L2 are located may be calculated.

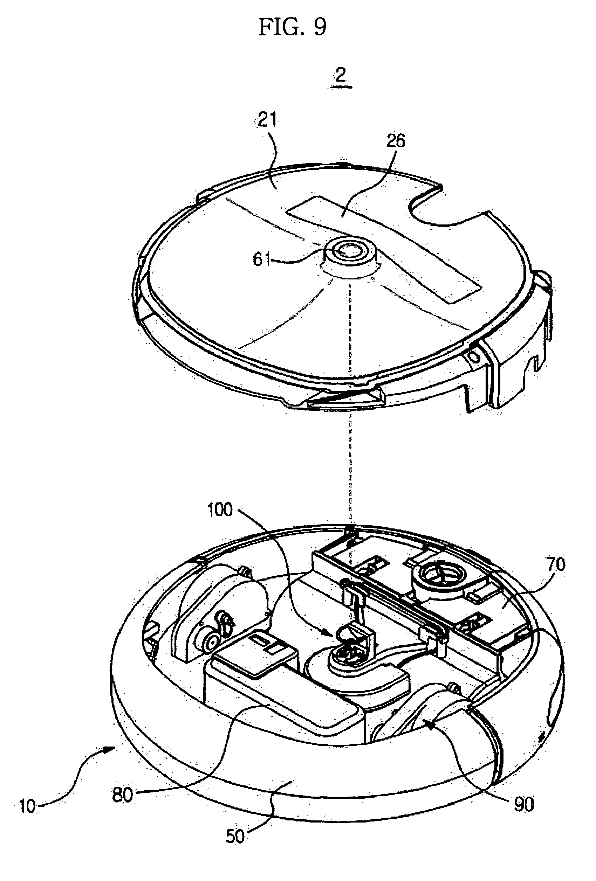

FIG. 9 is a view illustrating the configuration of a robot cleaner in accordance with one embodiment.

As shown in FIG. 9, a robot cleaner 2 in accordance with this embodiment may include a main body 10, and a cover 21 covering the upper portion of the main body 10.

Two driving wheels 90 may be symmetrically arranged at the left and right edges of the central region of the lower portion of the main body 10.

A sensor assembly 100 may be mounted at the central part of the main body 10. If the sensor assembly 100 is mounted at the central part of the main body 10, infrared light is not emitted in all directions by various constituent parts arranged within the main body 10. Therefore, the sensor assembly 100 may be mounted at a higher position than other constituent parts.

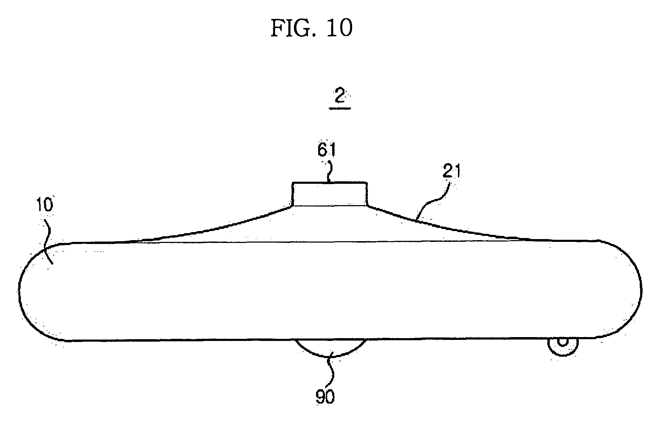

FIG. 10 is a side view of the robot cleaner of FIG. 9.

As shown in FIGS. 9 and 10, since the sensor assembly 100 is located at a higher position than the side surface of the main body 10, the cover 21 installed on the upper portion of the main body 10 may be provided with an inclined surface such that the central part of the cover 21 is gently protruded so as to accommodate the sensor assembly 100.

According to the size of the sensor assembly 100, a protrusion having a size corresponding to the size of the sensor assembly 100 may be formed at the central part of the cover 21.

A vision window 61 may be formed at the central part of the cover 21 so as to allow a camera unit 310 (with reference to FIG. 3) of the sensor assembly 100 to photograph an image above the robot cleaner 2.

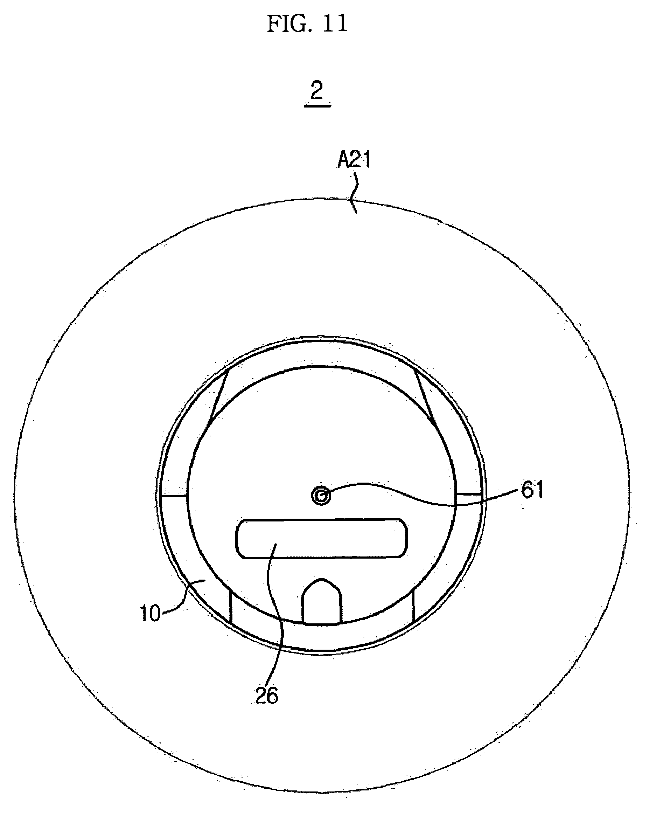

FIG. 11 is a view illustrating a region of the light beam emitted from the robot cleaner of FIG. 9.

As shown in FIG. 11, since the sensor assembly 100 is located at a higher position than the main body 10, infrared light irradiated from the sensor assembly 100 is not shielded by other constituent parts.

Therefore, a region A21 of the light beam emitting from the robot cleaner 2 may be formed in a completely circular shape.

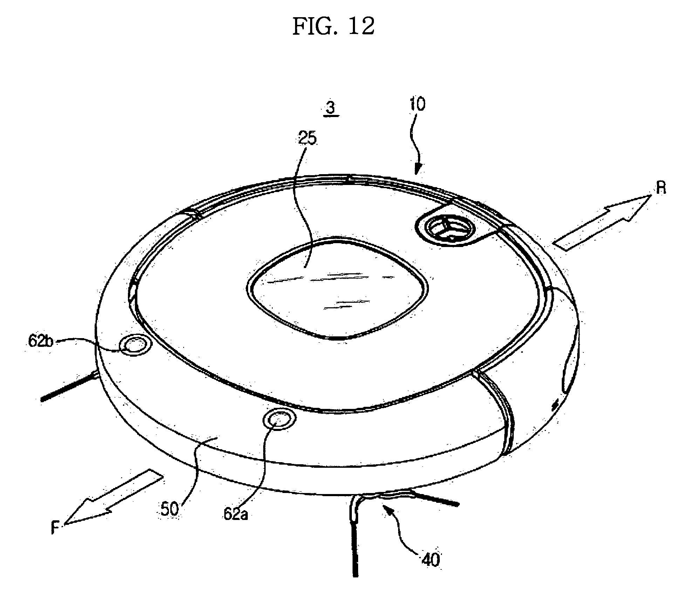

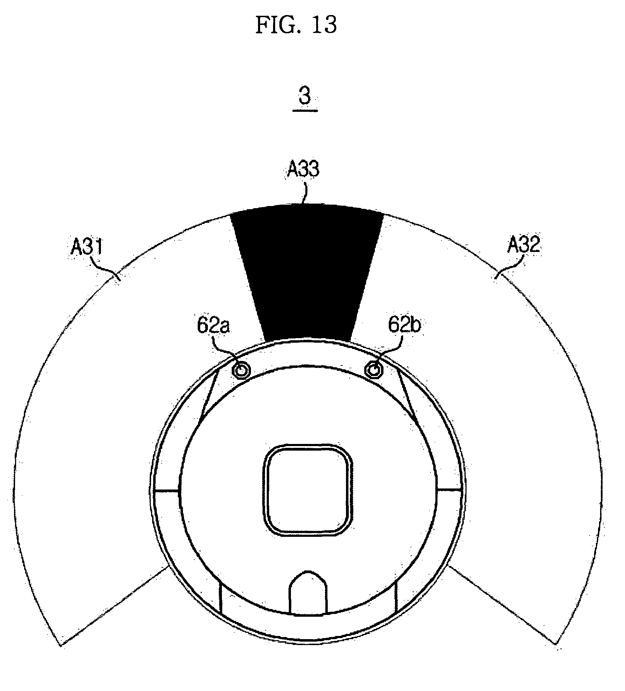

FIG. 12 is a view illustrating the configuration of a robot cleaner in accordance with one embodiment, and FIG. 13 is a view illustrating a region of the light beam emitted from the robot cleaner of FIG. 12.

As shown in FIGS. 12 and 13, a robot cleaner 3 in accordance with this embodiment may include a pair of vision windows 62a and 62b located so as to be biased in the diagonal direction on the front portion of a main body 10.

Two sensor assemblies 100 (with reference to FIG. 3), each of which is installed below each of the vision windows 62a and 62b, may be installed.

If one pair of vision windows 62a and 62b and one pair of the sensor assemblies 100 are installed, a region of the light beam generated from the robot cleaner 3 may be increased.

When the robot cleaner 3 actually travels, portions of the robot cleaner 3 biased in the diagonal direction on the front portion of the robot cleaner 3 rather than the front surface of the robot cleaner 3 may easily collide with an obstacle or a wall surface.

Therefore, by arranging the vision windows 62a and 62b and the sensor assemblies 100, as shown in FIGS. 12 and 13, whether or not the portions of the robot cleaner 3 easily generating collision approach an obstacle or a wall surface may be sensed.

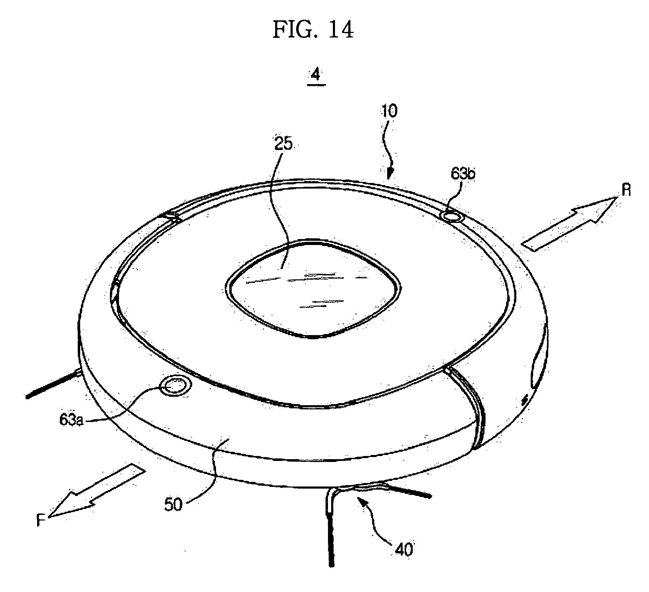

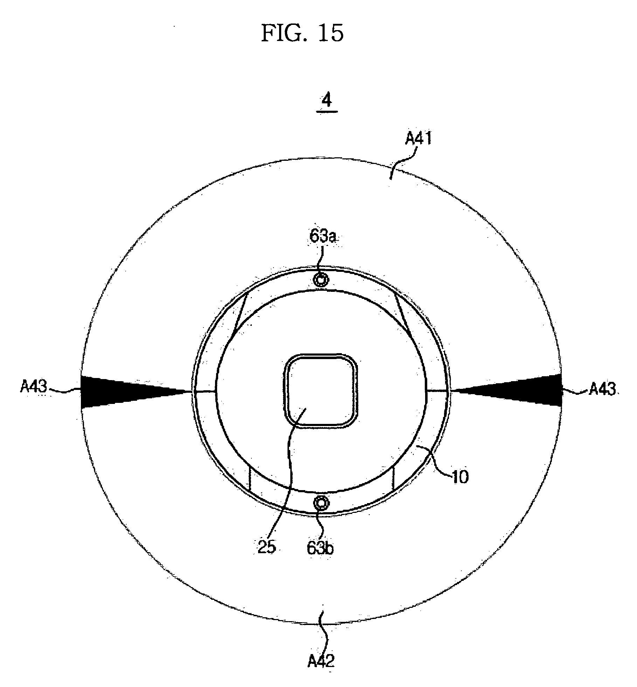

FIG. 14 is a view illustrating the configuration of a robot cleaner in accordance with a one embodiment, and FIG. 15 is a view illustrating a region of the light beam emitted from the robot cleaner of FIG. 14.

As shown in FIGS. 14 and 15, a robot cleaner 4 in accordance with this embodiment may include two vision windows 63a and 63b formed at the front portion and the rear portion of a main body 10.

Two sensor assemblies 100 (with reference to FIG. 3), each of which is installed below each of the vision windows 63a and 63b, are installed.

If the two vision windows 63a and 63b and the two sensor assemblies 100 are provided at the front portion and the rear portion of the robot cleaner 4, a region of the light beam generated from the robot cleaner 3 may be extended to the rear area A42 in addition to the front area A41.

When the region A41, A42, A43 and A44 of the light beam is extended to the rear area, collision of the robot cleaner 4 with an obstacle or a wall surface arranged in an area in the rear of the robot cleaner 4 may be prevented even if the robot cleaner 4 moves rearward.

Although the above embodiments of the present invention describe various mounting methods of the sensor assemblies 100, the sensor assemblies 100 may be mounted at various portions of the robot cleaner in addition to the described mounting methods.

For example, the sensor assemblies 100 may be installed at all of the front, rear and side portions of the robot cleaner.

Further, although the above embodiments describe installation of one or two sensor assemblies 100, a larger number of sensor assemblies 100 may be installed.

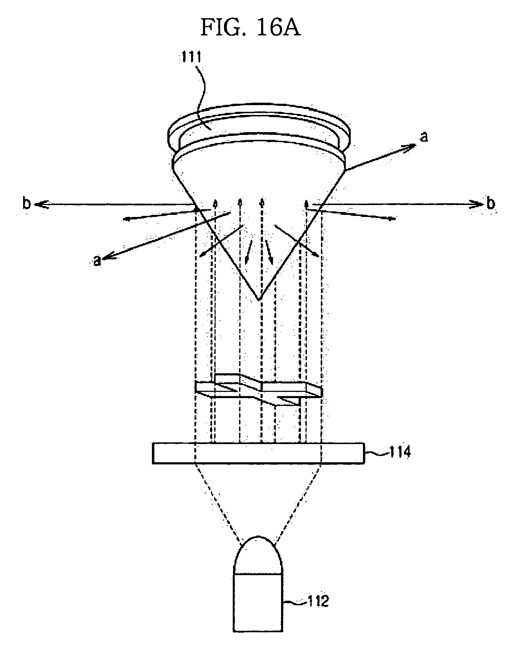

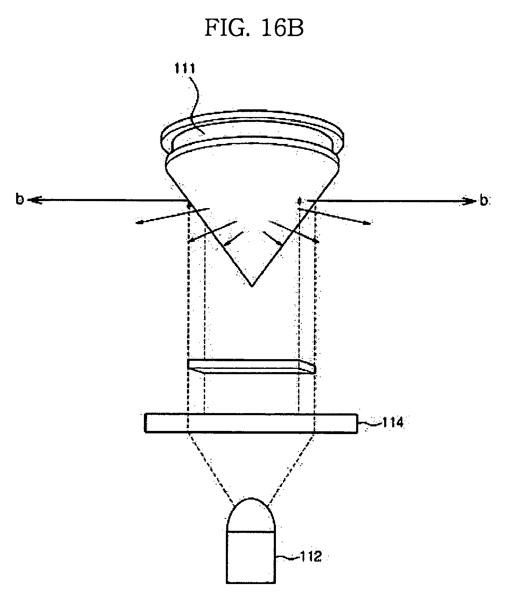

FIGS. 16A and 16B are views illustrating some constituent parts of a sensor assembly in accordance with one embodiment.

As shown in FIGS. 16A and 16B, a slit 114 provided with a groove having a designated shape formed thereon may be arranged between a laser diode 112 and a conical emitting reflector 111. The slit 114 changes the shape of a laser beam irradiated from the laser diode 112 into one of various shapes according to the shape of the groove, and then allows the laser beam having the changed shape to be incident upon the emitting reflector 111.

If a cross-shaped groove is formed on the slit 114, as shown in FIG. 16A, the slit 114 changes the shape of the laser beam irradiated from the laser diode 112 into a cross shape. The cross-shaped laser beam is incident upon the emitting reflector 111 and thus generates omnidirectional light beam in which the intensity of light directed in specific directions is higher than the intensity of light directed in other directions. In more detail, when the cross-shaped laser beam is reflected by the surface of the emitting reflector 111, the intensity of light directed in the directions a, b, c and d become higher than the intensity of light directed in other directions. Here, the directions a, b, c and d are random directions which meet at right angles to each other.

In sensing of an obstacle, although generation of a uniform light beam may be advantageous, different intensities of light according to direction may be required as needed. In this case, the slit 114 provided with the cross-shaped groove may be used, and the number of strokes of the groove may be adjusted as needed.

As shown in FIG. 16B, if the slit 114 having an I-shaped groove formed thereon by removing one stroke from the cross-shaped groove is used, omnidirectional light beam in which the intensity of light directed in the directions b and d is higher than the intensity of light directed in other directions is generated.

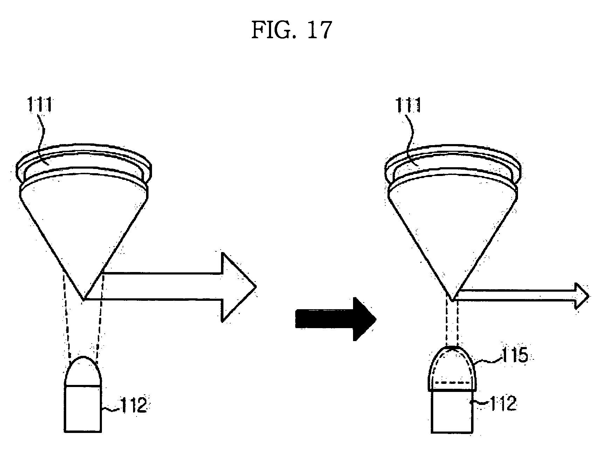

FIG. 17 is a view illustrating some constituent parts of a sensor assembly in accordance with one embodiment.

If light irradiated from a light source is incident directly upon a reflector, generated light beam has a designated thickness. According to purpose of the sensor assembly 110, generation of sharp light beam may be required.

As shown in FIG. 17, when the light emitting unit 112 is covered with a cap-shaped structure 115 provided with a small hole formed on the upper portion thereof, light irradiated from the light emitting unit 112 passes through the hole formed on the structure 115 and thus the divergence angle of the light is reduced, and the light having the reduced divergence angle is incident upon the emitting reflector 11 and thus generates the light beam of a thin thickness.

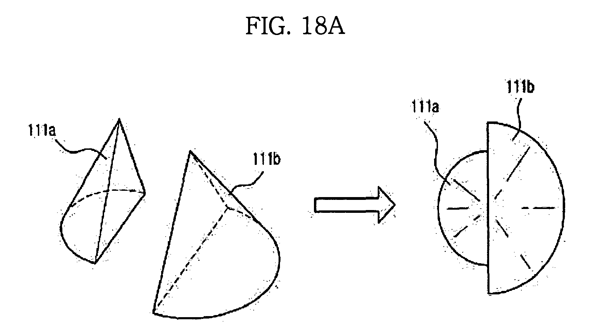

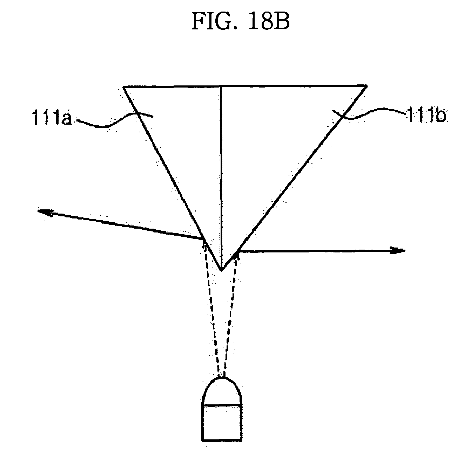

FIGS. 18A and 18B are views illustrating some constituent parts of a sensor assembly in accordance with one embodiment.

With reference to FIG. 18A, an emitting reflector 111 includes at least two conical mirror pieces having different diameters. In more detail, in the embodiment of FIG. 18A, the emitting reflector 111 is formed by arranging a piece 111a obtained by bisecting a conical mirror having a diameter D1 in the vertical direction and a piece 111b obtained by bisecting a conical mirror having a diameter D2 in the vertical direction such that the cross sections of the piece 111a and the piece 111b are opposite each other. The right portion of FIG. 18A illustrates the shape of the emitting reflector 111 as seen from the top.

The emitting reflector 111 shown in FIGS. 18A and 18B may be applied directly to the sensor assembly, and a rotating device (not shown) may be connected to the emitting reflector 111 so as to rotate the emitting reflector 111.

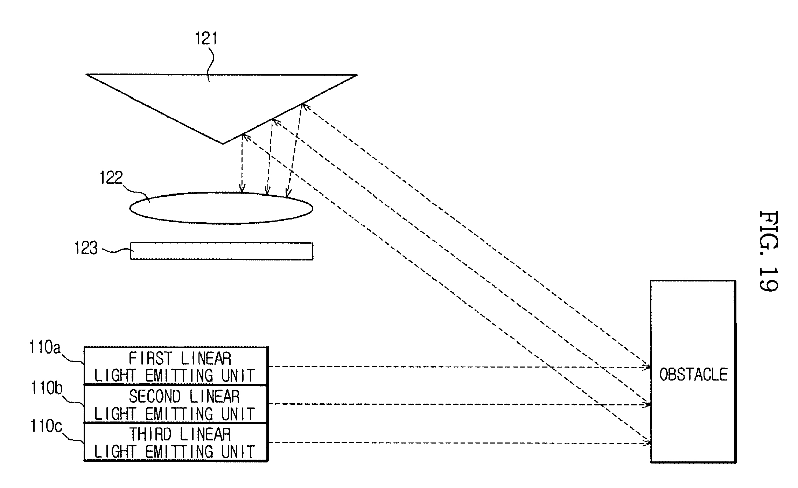

FIG. 19 is a view illustrating some constituent parts of a sensor assembly in accordance with one embodiment.

With reference to FIG. 19, the sensor assembly in accordance with this embodiment may include a plurality of light beam emitting units irradiating light at different heights. In this embodiment, for example, the sensor assembly includes three light beam emitting units 110a to 110c. However, more or less units can be provided as needed to generate the desired coverage.

As shown in FIG. 19, if the first to third light beam emitting units 110a to 110c are located at different heights, the first light beam emitting unit 110a senses the upper portion of an obstacle and the third light beam emitting unit 110c senses the lower portion of the obstacle, based on the second light beam emitting unit 110b.

Although FIG. 19 illustrates the obstacle as having a greater height than the first light beam emitting unit 110a, if the obstacle has a height smaller than the first light beam emitting unit 110a and greater than the second light beam emitting unit 110b, light emitted from the second and third light beam emitting units 110b and 110c is received by a reflected light receiving unit 120, and if the obstacle has a height smaller than the second light beam emitting unit 110b and greater than the third light beam emitting unit 110c, only light emitted from the third light beam emitting unit 110c is received by the reflected light receiving unit 120.

In order to judge which light beam emitting unit emits light received by the reflected light receiving unit 120, points of time when the respective light beam emitting units 110a to 110c irradiate light may be different, and if the respective light beam emitting units 110a to 110c simultaneously irradiate light, colors of light emitted from the respective light beam emitting units 110a to 110c may be different.

Although the embodiment of FIG. 19 illustrates the light beam emitting units 110a, 110b and 110c as being aligned in a vertical line, the light beam emitting units 110a, 110b and 110c may be independently separated.

As is apparent from the above description, in a sensor assembly and a robot cleaner having the same in accordance with one embodiment, an obstacle sensor and a vision sensor form one sensor assembly, and thus the robot cleaner may have a simple structure.

Further, the sensor assembly in accordance with the embodiment may reduce the area of a space occupied by the robot cleaner and the overall size of the robot cleaner.

Further, the robot cleaner senses obstacles present in all directions using a light beam, and does not require a plurality of sensors or a separate servo-mechanism, thus improving economical and structural efficiency.

Although a few embodiments have been shown and described, it would be appreciated by those skilled in the art that changes may be made in these embodiments without departing from the invention, the scope of which is defined in the claims.

## Claims

1. A sensor assembly (100) for a robot cleaner (1) having a main body (10) comprising:
a housing (110);
a light emitting module (200) mounted on the housing (110) and generating light,
a light receiving (300) module mounted on the housing and receiving reflected light obtained by reflecting the generated light from the light emitting module by an obstacle, wherein the light receiving module includes:
a receiving reflector (320) concentrating the reflected light and provided with an opened central part to form a vision hole (330); and
a camera unit (310) sensing light, wherein:
the camera unit senses the reflected light concentrated by the receiving reflector and photographs an image above the main body of the robot cleaner through the vision hole, simultaneously.

2. The sensor assembly (100) of claim 1,
wherein the light emitting module (200) and the light receiving module (300) mounted on the housing (110) are formed integrally.

3. A robot cleaner(1) comprising:
a main body (10); and
at least one sensor assembly (100) according to claim 1 or 2, wherein the at least one sensor assembly (100) is mounted on the main body (10).

4. The robot cleaner (1) according to claim 3, wherein the light emitting module (200) includes:
a light emitting unit (210) generating light; and
an emitting reflector (220) formed in a conical shape so as to reflect the light generated from the light emitting unit (210) in all directions of 360 degrees.

5. The robot cleaner (1) according to claim 4, wherein the emitting reflector (220) and the light emitting unit (210) are mounted on the housing (110) such that the central parts thereof are aligned in a vertical line.

6. The robot cleaner (1) according to claim 3, 4 or 5, wherein the receiving reflector (320) has a circular cross-sectional shape.

7. The robot cleaner(1) according to any one of claims 3 to 6, wherein the receiving reflector (320) is formed in a conical shape, a part of which is cut flat, so as to be mounted on the housing (110).

8. The robot cleaner (1) according to any one of claims 3 to 7, wherein the light receiving module (300) further includes a wide-angle lens (350) mounted on the upper portion of the receiving reflector (320) to obtain a viewing angle of the camera unit (310).

9. The robot cleaner (1) according to any one of claims 3 to 8, wherein the main body (10) includes a vision window (60) being transparent so as to allow the camera unit (310) of the sensor assembly (100) to photograph the image above the main body (10).

10. The robot cleaner (1) according to claim 9, wherein the vision window (60) includes a wide-angle lens (350) to obtain a viewing angle of the camera unit (310).

11. The robot cleaner (1) according to any one of claims 3 to 10, wherein the at least one sensor assembly (100) is arranged on at least one of the front portion and the rear portion of the main body (10).

12. The robot cleaner (1) according to any one of claims 3 to 10, wherein the at least one sensor assembly (100) is arranged on the front portion of the main body (10).

13. The robot cleaner (1) according to any one of claims 3 to 10, wherein the at least one sensor assembly (100) is arranged at the central part of the main body (10).

14. The robot cleaner (1) according to claim 13, wherein the central part of the main body (10) is protruded upward such that the at least one sensor assembly (100) is arranged at the central part of the main body (10).

15. The robot cleaner (1) according to claim 13, wherein the central part of the main body (10) is gently protruded upward such that the at least one sensor assembly (100) is arranged at the central part of the main body (10).

## Patentansprüche

1. Sensoranordnung (100) für einen Roboterreiniger (1) mit einem Hauptkörper (10) umfassend:
ein Gehäuse (110);
ein Licht emittierendes Modul (200), das am Gehäuse (110) montiert ist und Licht erzeugt;
ein Licht empfangendes Modul (300), das am Gehäuse montiert ist und reflektiertes Licht empfängt, das durch Reflektieren des vom Licht emittierenden Modul erzeugten Lichts von einem Hindernis erhalten wird, wobei das Licht empfangende Modul einschließt:
einen Empfangsreflektor (320), der das reflektierte Licht konzentriert und mit einem offenen mittigen Teil versehen ist, um ein Sichtloch (330) zu bilden; und
eine Kameraeinheit (310), die Licht abtastet, wobei:
die Kameraeinheit das reflektierte Licht abtastet, das vom Empfangsreflektor konzentriert wurde und fotografiert, gleichzeitig, ein Bild über dem Hauptkörper des Roboterreinigers durch das Sichtloch.

2. Sensoranordnung (100) nach Anspruch 1, wobei das Licht emittierende Modul (200) und das Licht empfangende Modul (300), die am Gehäuse (110) montiert sind, integral geformt sind.

3. Roboterreiniger (1), umfassend:
einen Hauptkörper (10); und
zumindest eine Sensoranordnung (100) nach Anspruch 1 oder 2, wobei die zumindest eine Sensoranordnung (100) am Hauptkörper (10) montiert ist.

4. Roboterreiniger (1) nach Anspruch 3, wobei das Licht emittierende Modul (200) einschließt:
eine Licht emittierende Einheit (210), die Licht erzeugt; und
einen emittierenden Reflektor (220), der konischer Form ist, um das von der Licht emittierenden Einheit (210) erzeugte Licht in alle Richtungen von 360 Grad zu reflektieren.

5. Roboterreiniger (1) nach Anspruch 4, wobei der emittierende Reflektor (220) und die Licht emittierende Einheit (210) am Gehäuse (110) derartig montiert sind, dass die mittigen Teile davon in einer vertikalen Linie ausgerichtet sind.

6. Roboterreiniger (1) nach Anspruch 3, 4 oder 5, wobei der Empfangsreflektor (320) eine kreisförmige Querschnittsform aufweist.

7. Roboterreiniger (1) nach einem beliebigen der Ansprüche 3 bis 6, wobei der Empfangsreflektor (320) konischer Form ist, wovon ein Teil flach geschnitten ist, um am Gehäuse (10) montiert werden zu können.

8. Roboterreiniger (1) nach einem beliebigen der Ansprüche 3 bis 7, wobei das Licht empfangende Modul (300) ferner ein Weitwinkelobjektiv (350) einschließt, das am oberen Teil des Empfangsreflektors (320) montiert ist, um einen Blickwinkel der Kameraeinheit (310) zu erhalten.

9. Roboterreiniger (1) nach einem beliebigen der Ansprüche 3 bis 8, wobei der Hauptkörper (10) ein transparentes Sichtfenster (60) einschließt, um der Kameraeinheit (310) der Sensoranordnung (100) zu gestatten das Bild oberhalb des Hauptkörpers (10) zu fotografieren.

10. Roboterreiniger (1) nach Anspruch 9, wobei das Sichtfenster (60) ein Weitwinkelobjektiv (350) um einen Blickwinkel der Kameraeinheit (310) zu erhalten.

11. Robotereiniger (1) nach einem beliebigen der Ansprüche 3 bis 10, wobei die zumindest eine Sensoranordnung (100) an zumindest dem vorderen Teil oder dem hinteren Teil des Hauptkörpers (10) angeordnet ist.

12. Robotereiniger (1) nach einem beliebigen der Ansprüche 3 bis 10, wobei die zumindest eine Sensoranordnung (100) am vorderen Teil des Hauptkörpers (10) angeordnet ist.

13. Robotereiniger (1) nach einem beliebigen der Ansprüche 3 bis 10, wobei die zumindest eine Sensoranordnung (100) am mittigen Teil des Hauptkörpers (10) angeordnet ist.

14. Roboterreiniger (1) nach Anspruch 13, wobei der mittige Teil des Hauptkörpers (10) derartig nach oben hervorsteht, dass die zumindest eine Sensoranordnung (100) am mittigen Teil des Hauptkörpers (10) angeordnet ist.

15. Roboterreiniger (1) nach Anspruch 13, wobei der mittige Teil des Hauptkörpers (10) derartig sanft nach oben hervorsteht, dass die zumindest eine Sensoranordnung (100) am mittigen Teil des Hauptkörpers (10) angeordnet ist.

## Revendications

1. Ensemble capteur (100), destiné à un robot nettoyeur (1) qui possède un corps principal (10), comprenant :
un boîtier (110) ;
un module émetteur de lumière (200) monté sur le boîtier (110) et générant de la lumière,
un module récepteur de lumière (300) monté sur le boîtier et recevant de la lumière réfléchie produite par la réflexion par un obstacle de la lumière venant du module émetteur de lumière, ledit module récepteur de lumière comprenant :
un réflecteur de réception (320) qui concentre la lumière réfléchie et qui possède une partie centrale ouverte formant un orifice de vision (330) ; et
un ensemble caméra (310) qui détecte lumière, dans lequel :
l'ensemble caméra détecte la lumière réfléchie concentrée par le réflecteur de réception et, simultanément, il photographie une image au-dessus du corps principal du robot nettoyeur à travers l'orifice de vision.

2. Ensemble capteur (100) selon la revendication 1, dans lequel le module émetteur de lumière (200) et le module récepteur de lumière (300) monté sur le boîtier (110) sont formés d'un seul tenant.

3. Robot nettoyeur (1) comprenant :
un corps principal (10) ; et
au moins un ensemble capteur (100) selon la revendication 1 ou la revendication 2, dans lequel le ou les ensembles capteur (100) sont montés sur le corps principal (10).

4. Robot nettoyeur (1) selon la revendication 3, dans lequel le module émetteur de lumière (200) comprend :
un ensemble émetteur de lumière (210) qui génère de la lumière ; et
un réflecteur d'émission (220) de forme conique servant à réfléchir la lumière générée par l'ensemble émetteur de lumière (210) dans toutes les directions sur 360 degrés.

5. Robot nettoyeur (1) selon la revendication 4, dans lequel le réflecteur d'émission (220) et l'ensemble émetteur de lumière (210) sont montés sur le boîtier (110) de telle façon que leurs parties centrales sont alignées selon une ligne verticale.

6. Robot nettoyeur (1) selon l'une quelconque des revendications 3, 4 ou 5, dans lequel le réflecteur de réception (320) possède une section transversale de forme circulaire.

7. Robot nettoyeur (1) selon l'une quelconque des revendications 3 à 6, dans lequel le réflecteur de réception (320) possède une forme conique dont une partie est découpée à plat afin de pouvoir le monter sur le boîtier (110).

8. Robot nettoyeur (1) selon l'une quelconque des revendications 3 à 7, dans lequel le module récepteur de lumière (300) comprend en outre une lentille grand angle (350) montée sur la partie supérieure du réflecteur de réception (320) afin d'obtenir un angle de vision de l'ensemble caméra (310).

9. Robot nettoyeur (1) selon l'une quelconque des revendications 3 à 8, dans lequel le corps principal (10) comprend une fenêtre de vision (60) transparente afin de permettre à l'ensemble caméra (310) de l'ensemble capteur (100) de photographier l'image au-dessus du corps principal (10).

10. Robot nettoyeur (1) selon la revendication 9, dans lequel la fenêtre de vision (60) comprend une lentille grand angle (350) afin d'obtenir un angle de vision de l'ensemble caméra (310).

11. Robot nettoyeur (1) selon l'une quelconque des revendications 3 à 10, dans lequel le ou les ensembles capteur (100) sont disposés sur l'une au moins de la partie avant et de la partie arrière du corps principal (10).

12. Robot nettoyeur (1) selon l'une quelconque des revendications 3 à 10, dans lequel le ou les ensembles capteur (100) sont disposés sur la partie avant du corps principal (10).

13. Robot nettoyeur (1) selon l'une quelconque des revendications 3 à 10, dans lequel le ou les ensembles capteur (100) sont disposés dans la partie centrale du corps principal (10).

14. Robot nettoyeur (1) selon la revendication 13, dans lequel la partie centrale du corps principal (10) fait saillie vers le haut de façon à pouvoir disposer le ou les ensembles capteur (100) dans la partie centrale du corps principal (10).

15. Robot nettoyeur (1) selon la revendication 13, dans lequel la partie centrale du corps principal (10) fait légèrement saillie vers le haut de façon à pouvoir disposer le ou les ensembles capteur (100) dans la partie centrale du corps principal (10).
